# EUROPEAN PATENT APPLICATION

(11) **EP 2 282 473 A1**
(43) Date of publication of application: **09.02.2011**
(21) Application number: 09275041.3
(22) Date of filing: 04.06.2009
(51) Int. Cl.: H04L 29/06

(54) **System and method of analysing transfer of media over a network**

(71) Applicant: BAE Systems PLC, 6 Carlton Gardens London SW1Y 5AD (GB)
(72) Inventor: The designation of the inventor has not yet been filed

(57) **Abstract**

A method of analysing transfer of media over a network (100), the method including steps of calculating a value representing a likelihood of unlicensed data transfer on a network. The calculation involves variables selected from a set including: a measure or estimate of an amount of transfer of unlicensed media; a measure or estimate of commercial value of media; a measure or estimate of a number of subscribers being sampled for identifying transfer of media; a measure or estimate of movement of encrypted media, and/or a measure or estimate of user behaviour indicative of unlicensed transfer or media.

## Description

The present invention relates to analysing transfer of media over a network.

Unlicensed transfer of media is rife on the internet. Such transfers can damage a rights holder financially and often constitute copyright infringement. This activity is particularly common on peer-to-peer (P2P) networks. It is normally impractical to police for unlicensed transfers manually on such networks and a system that assists with identifying potential unlicensed transfers is desirable.

Embodiments of the present invention are intended to address the issues outlined above.

According to a first aspect of the present invention there is provided a method of analysing transfer of media over a network, the method including steps of:
calculating a value representing a likelihood of unlicensed data transfer on a network, wherein the calculation involves variables selected from a set including:
   a measure or estimate of an amount of transfer of unlicensed media;
   a measure or estimate of commercial value of media;
   a measure or estimate of a number of subscribers being sampled for identifying transfer of media;
   a measure or estimate of movement of encrypted media, and/or a measure or estimate of user behaviour indicative of unlicensed transfer or media.

The method may include obtaining a measurement of an amount of transfer of unlicensed media and this may include comparing the transferred media with a database of known media to identify the media (e.g. using fingerprint or watermark techniques). The method may include rebuilding the transferred media from separate data packets. The method may include monitoring status of users and comparing the status with their entitlement to move media over the network, which may be a P2P network. Each file transferred by over the (P2P) network may have an associated unique file identifier (UFI). Each said media asset may have a plurality of associated UFIs. Each file (and therefore UFI) may include multiple media assets.

The method may further include analysing information sourced from at least one client application of a P2P or private network.

The method may include, for each upload/download on the (P2P) network:
extracting the UFI from the network traffic;
comparing the extracted UFI against a local and central cache of known media UFIs; and
if the comparison indicates that the extracted UFI is unknown, then the method can involve sampling and storing content from the media transfer.

The method may further include analysing the stored content (e.g. at a centralised processor/location) by comparing it with a database of known media fingerprints (e.g. content fingerprint, watermark) and, if the stored content is recognised then the UFI of the extracted media transfer is added to a central store.

If the media is found to be unlicensed and the user is also unlicensed for the (P2P) network then the media transfer is recorded as unlicensed/an infringement and the IP address may be extracted from the traffic and linked to a user identifier obtained from an ISP based on the user's session information. Information about the transfer and the sampled content may be retained in a secure evidence store. For P2P protocols that encrypt content (but not the UFI), the UFI only may be used to identify the content. The UFI database may be continually updated with new relationships and content identifications derived from both global databases of information and continual harvesting of UFIs traded via P2P networks in the ISP. The solution can be scaled horizontally and vertically through distributed, highly scalable hardware probes, the intelligent separation of UFI database caches (local, central, global) and a centralised fingerprinting function.

The method may include calculating the estimate of the commercial value of the media based on an average current market rate of licensed versions of the media. The commercial value estimate calculation may use a model including factors selected from a set including: Media type; Rights holder; Release/Pre-release; Age/Freshness; Genre; Perceived popularity; Probability of lost sale. The calculation may be based on both a unique broadband subscriber basis and a media asset basis.

The method may include calculating the estimate of the number of subscribers being sampled for identifying transfer of media. The method may collect data from a specified set of ISP network links where sample size is related to factors selected from a set including: Percentage of overall network traffic sampled; Percentage of network coverage; Percentage of time sampled per link. The number of subscribers calculation may include comparing against user coverage: Percentage of an individuals user traffic sampled at any point in time; Percentage of overall population sampled in a given period. A time of the sampling may be varied across a population base of the network either randomly or by sampling of all users over all times-of-day within a given period. A level of how representative is the sample can then be calculated as a statistical confidence with respect to an entire bandwidth envelope of the ISP.

The method may include calculating a measure or estimate of movement of encrypted media. This may involve statistical measurement of movement of encrypted media by searching for inbound/outbound web pages, protocols used, ports opened and/or subscriber behaviours that give an indication of unlicensed transfer of media.

The method may include calculating the estimate of user behaviour indicative of unlicensed transfer or media by analysing user behaviour indicative of attempt to avoid controls intended to prevent movement of unlicensed media; analysing for use of IP spoofing; analysing for proxy avoidance; analysing for use of protocol encryption and/or analysing for use of closed authentication networks.

According to another aspect of the present invention there is provided a method of analysing media transferred over a network including:
analysing media being transferred over a network in order to obtain an identifier associated with the media;
comparing the identifier with a set of data identifying media content in order to identify content of the media being transferred.

The step of analysing the media may be implementing by rebuild and linking of the identifier close to the network, e.g. at a network probe.

The method may be implemented at a centralised fingerprinting function.

According to another aspect of the present invention there is provided a method of analysing media being transferred over a network, the method including analysing transfer of encrypted media files in order to provide a measure or estimate of movement of encrypted media files.

The method may include searching for user behaviours indicative of transfer of unidentified media files.

According to yet another aspect of the present invention there is provided a computer program product comprising a computer readable medium, having thereon computer program code means, when the program code is loaded, to make the computer execute methods of analysing data being transferred over a network substantially as described herein.

According to another aspect of the present invention there is provided apparatus configured to execute methods of analysing data being transferred over a network substantially as described herein.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1 illustrates schematically a communications network;
Figure 2 illustrates a scheme for computing an infringement metric for media being transferred across the network;
Figure 3 is a calculation flow for the metric computation, and
Figure 4 is a graph illustrating the metric.

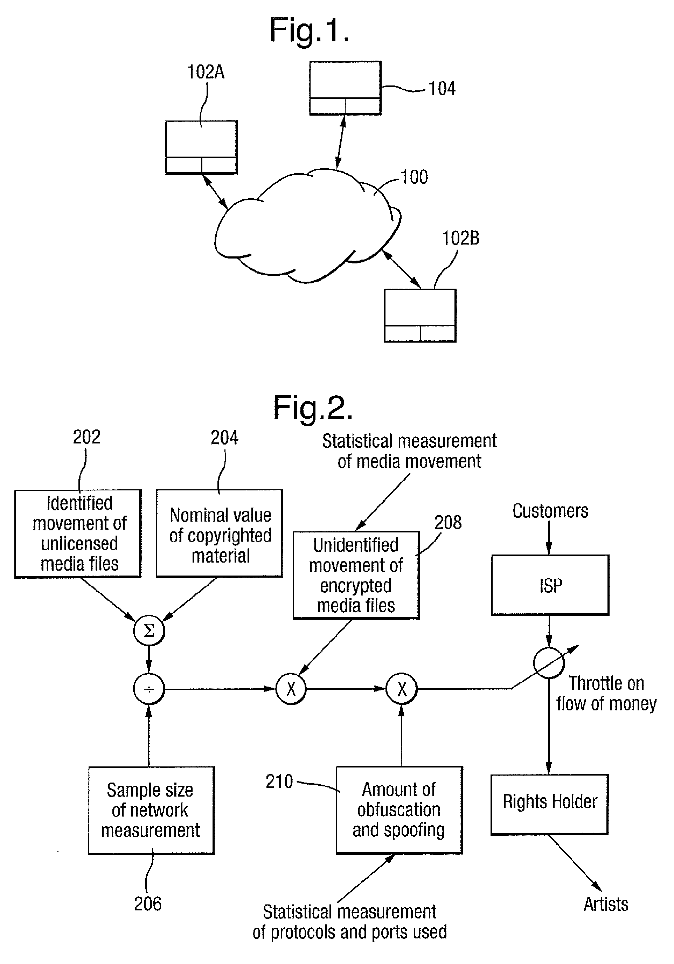

Figure 1 illustrates schematically a communications network 100, which comprises a peer-to-peer (P2P) network that enables users to connect their computers and share media/files directly with other users without having to go through a centralized server. Several examples of such networks are currently in use on the internet, e.g. BitTorrent, Gnutella and eDonkey. A plurality of users (two users 102A, 102B are shown in the example) connect to the network using suitable software that allows them to transfer media in the form of files between each other.

As discussed above, such networks are prone to abuse and can be used for unlicensed transfer of media, which can be an infringement of copyright law. In an embodiment of the system described herein, a monitoring device 104 is also in communication with the network 100. The device may be a conventional computer having a processor and memory that is configured to execute the steps described herein, or communicate with a remote system that will perform these steps.

Referring to Figure 2, a schematic drawing of steps performed by the monitoring system 104 is shown. The steps are intended to compute a "copyright infringement metric" that is indicative of the level of potential unlicensed transfer of media that is occurring in the network at a given time. The metric is representative of the nominal value of infringed material from a specified set of rights holders moving over an ISP network by individual subscribers of that network per time period. This nominal value can be broken out for each rights holder, potentially giving a metric per media type per rights holder.

At step 202, identified movement of unlicensed media is estimated or measured. This step can involve rebuilding individual electronic versions of music, film, games, books, software applications, etc, that move across the internet/network in the form of several individual packets. Such media can be looked up against a database of known identifiers of the rebuilt file, which can be based on existing technology, e.g. digital/audio fingerprint, watermark, etc. This look-up can be performed by the device 104, or at a remote device in communication with it. A check can then be carried out to confirm whether or not the media file is unlicensed. It is possible to scale these operations for national broadband provider by implementing the rebuild and linking to the identification as close to the network as possible, e.g. at a network probe.

The operations of step 202 can also involve analysing the status of subscribers, e.g. monitoring whether they move media over each P2P network that is being monitored according to the entitlements they have been set by the network operator. Each file transferred by a P2P network can have a unique file identifier (UFI) associated with it and each media asset may have multiple UFIs associated with it. Thus, each file (and therefore UFI) may include multiple media assets. The monitoring device can perform the following operations for each upload/download on the P2P network:
- Extract the UFI from the traffic
- Compare the extracted UFI against a local and central cache of known UFIs
- If the extracted UFI is unknown then content from the transfer is sampled and centralised, e.g. transferred to another processor in communication with device 104 for further processing. The sampled content can then be analysed against a database of known media fingerprints (e.g. content fingerprint, watermark, etc).
- Alternatively, if the extracted UFI is recognised then that UFI is added to the central cache
- If the media asset is unlicensed and the user if also unlicensed for the P2P network then the transfer is recorded as an infringement. The IP address can extracted from the traffic and linked to the subscriber pseudonym obtained from the ISP based on session information. Information about the transfer and the sampled content may be retained in a secure evidence store.

For some P2P protocols that encrypt the content (but not the UFI), only the UFI may be used to identify the content. The UFI database can be continually updated with new relationships and content identifications derived from both global databases of information and continual harvesting of UFIs traded via P2P networks in the ISP. The above solution scales both horizontally and vertically through distributed, highly scalable hardware probes, the intelligent separation of UFI database caches (local, central, global) and a centralised fingerprinting function.

At step 204 the nominal value of media (copyrighted material) is computed. This computation may be based on an average of the current market rate of material transmitted by legal means on the internet. All media can be valued using an industry model for valuation based on any of the following factors, for example:
- Media type
- Rights holder
- Release / Pre-release
- Age / Freshness
- Genre
- Perceived popularity
- Probability of lost sale

The base data for the valuation can be sourced from existing commercial valuations of material in legitimate markets whether based digital or traditional distribution mechanisms. The valuation can be calculated on both a unique broadband subscriber and media asset basis.

The values computed at steps 202 and 204 may be combined with a value computed at step 206. At step 206 a sample size of the network measurement is computed. This is intended to represent the number of subscribers that are on the specific broadband network 100 who are being sampled for the purposes of identifying movement of media files. The operations can involve collecting data from a specified set of ISP network links where the sample size can be related to the following, for example:
- Percentage of overall network traffic sampled
- Percentage of network coverage
- Percentage of time sampled per link

This data can then be compared against the user coverage, e.g.:
- Percentage of an individual user's traffic sampled at any point in time
- Percentage of overall population sampled in a given period

The operations are designed to be as representative as network architecture allows in terms of user population, for instance:
- Full coverage in terms of overall population (every user is sampled)
- Partial or full coverage of each individual at any point in time

The time of day/time of week sampling can varied across the population in various ways, e.g. randomly, or by sampling of all users over all times-of-day within a given period. The level of how representative the sample is can then be calculated as a statistical confidence with respect to the entire bandwidth envelope of the ISP.

The result of combined values computed at steps 202, 204 and 206 may be further combined with a value computed at step 208. At step 208 operations relating to analysing unidentified movement of encrypted media files are performed. This can involve a statistical measurement of movement of encrypted media files by looking for inbound/outbound web pages, specific protocols being used, specific ports being opened and/or subscriber behaviours that are considered to give an indication of the movement of specific (albeit unidentified) media files. The operations can statistically model the movement of media assets over encrypted protocols where the user identity is known. The operations can measure the following, for example:
- Application protocol
- User identity (IP address)
- Destination identity (IP address)
- Volume of payload
- Timing of activity
- Leading/lagging indicators, for example, visited websites

A suspicion level of infringement can be calculated against the profile based on, e.g.:
- Known behaviour on P2P network
- Previous user behaviour, for example, known infringement
- Leading/lagging indicators

The media types and the numbers of assets are then calculated against a known distribution of media movements over given networks influenced by the following, for example:
- Volume of encrypted transfers
- Timing of activity
- Profile of P2P network
- Previous user behaviour

The operations can overlay information collected from activity monitored at an application level on the P2P networks themselves to confirm and enhance the accuracy of the estimated infringement level for a user. The operations may interact with the network in such a way as to direct network traffic to a known destination that behaves as a client on a P2P network and directly collects data on the file that is being requested/uploaded (file identifier, file content). The accuracy of the sample is then calculated as a statistical confidence with respect to the entire volume of encrypted traffic.

The value computed at step 208 may be combined with a value computed at step 210. At step 210 a value representing an estimate or measure of the amount of obfuscation and spoofing carried out by users of the network is computed. This can involve calculating a measurement of users' behaviour intended to avoid controls implemented to ensure that they do not move unlicensed media files, e.g. measuring their use of IP spoofing, proxy avoidance, protocol encryption and/or closed authentication networks.

The operations can statistically model the behaviour of individuals and calculate a score related to, e.g.:
- An individual's use of anonymous networks to evade detection
- An individual's participation in anonymous networks for other users to avoid detection
- An individual's use of encrypted, private networks known to harbour copyrighted material
- An individual's use of fraudulent techniques to evade network detection and/or implicate other users, e.g. IP or MAC spoofing

The operations can analyse traffic records for the following, for instance:
- Evidence of parallel, anonymous network sessions within the time period of the suspected infringement
- Evidence of outgoing anonymous network sessions by the ISP user
- Evidence of encrypted, authenticated sessions to known destinations or involving large volumes of traffic

An estimate of the copyright infringement that may be taking place for the individual can be calculated based on, e.g.:
- Previous user history
- Behavioural pattern for the anonymous or private network
- Volume and time activity of traffic through the quoted means
- The probability the user observed is actually the user engaging in the infringing behaviour

The operations may interact with the network in such a way as to direct network traffic to a known destination that behaves as a intermediary and directly collects data on the file that is being requested/uploaded (file identifier, file content). The accuracy of the estimate will be stated as a statistical confidence with respect to the volume and time activity of relevant traffic.

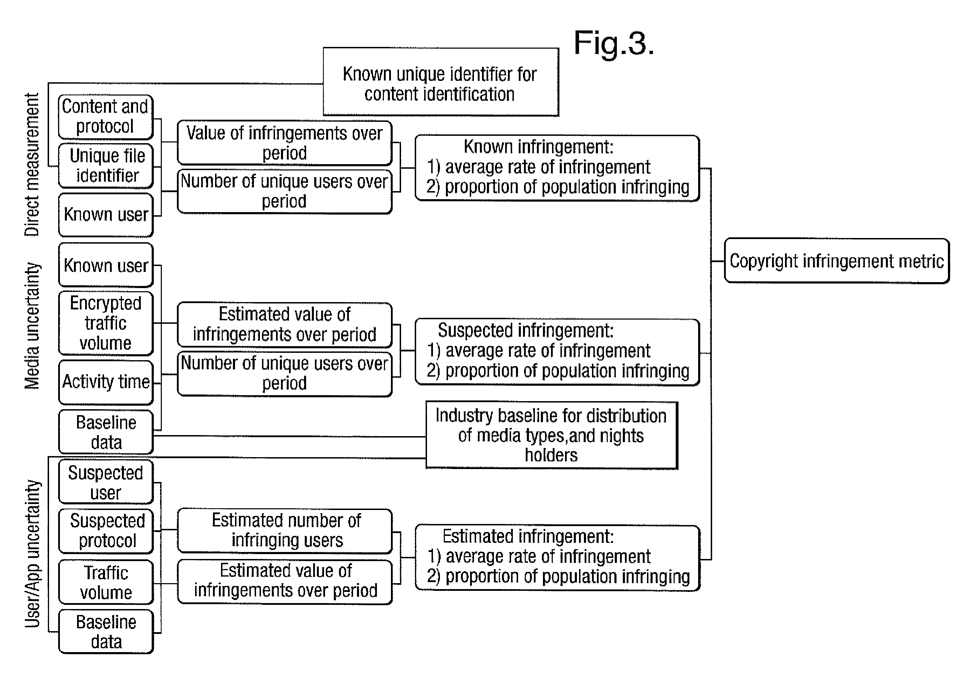

The known, suspected and estimated infringement activities are computed in terms of average nominal value of infringed material per user and the proportion of the population involved in infringing, as illustrated in Figure 3, which can involve the computations described with reference to Figure 2.

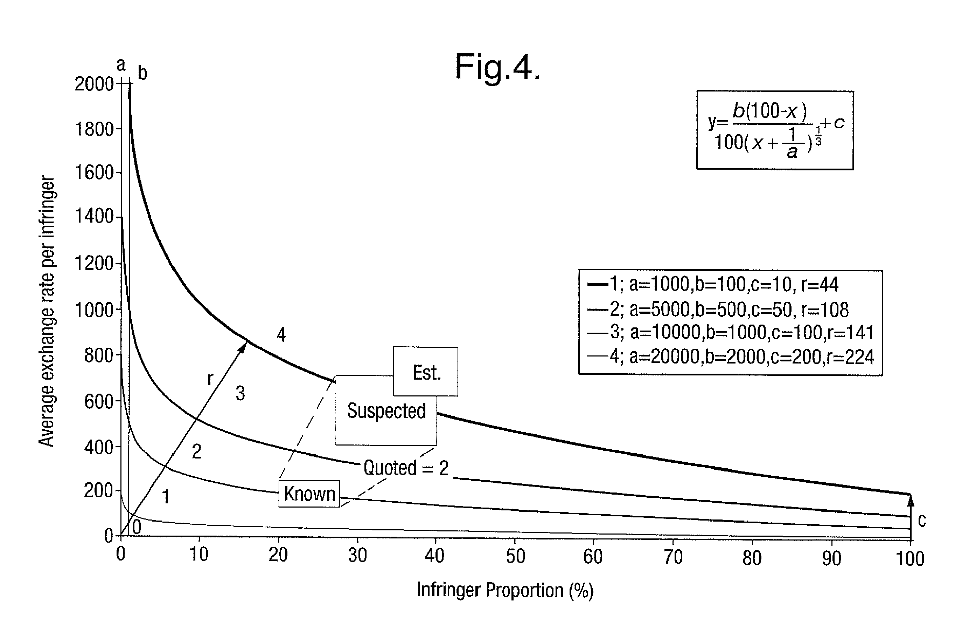

Referring to Figure 4, the copyright infringement metric will be based on a series of pre-determined parameters, e.g.:
- the average nominal value of infringements in a time period if a single user is involved in infringement (Parameter "a" in Figure 4)
- the average nominal value of infringements in a time period if 1% of the population is involved in infringement (Parameter "b")
- the average nominal value of infringements in a time period if 100% of the population is involved in infringement (Parameter "c")

A series of contours are calculated based on the relationship between the average nominal value of infringements in a time period and the proportion of infringing users in the population where each contour represents a specific set of chosen parameters (a, b and c). Each contour therefore represents a change in the value of the overall metric and can be descriptively referred to in terms of the minimum distance from the origin (parameter "r"). The specific values of the known, suspected and estimated activity are combined in a weighted average described as the quoted infringement value. The weights assigned to each value will be proportional based on the following, for example:
- distance from the previous (more certain) measurement
- the inverse of the calculated error

In this way if the suspected level of infringement is much higher than the known infringement level (based on a large proportion of encrypted traffic) then the weighting for the suspected infringement will also be higher; however, if the confidence interval of the suspected error is high then the weighting will be correspondingly low due to the uncertainty in the measurement. The quoted value can then be plotted with reference to the calculated contour values and assigned a value based on the two contours between which it falls.

## Claims

1. A method of analysing transfer of media over a network (100), the method including steps of:
calculating a value representing a likelihood of unlicensed data transfer on a network, wherein the calculation involves variables selected from a set including:
a measure or estimate of an amount of transfer of unlicensed media;
a measure or estimate of commercial value of media;
a measure or estimate of a number of subscribers being sampled for identifying transfer of media;
a measure or estimate of movement of encrypted media, and/or
a measure or estimate of user behaviour indicative of unlicensed transfer or media.

2. A method according to claim 1, including obtaining a measurement of indicative of transfer of unlicensed media.

3. A method according to claim 2, wherein the step of obtaining the measurement includes comparing the transferred media with a database of known media to identify the transferred media (e.g. using audio fingerprint or watermark techniques).

4. A method according to claim 2 or 3, including rebuilding the transferred media from separate data packets.

5. A method according to any one of claims 2 to 4, further including monitoring a status of at least one user and comparing the status with an entitlement of the user to transfer media over the network.

6. A method according to any one of claims 2 to 5, wherein each said media file transferred by over the network has an associated unique file identifier (UFI).

7. A method according to claim 6, including, for each media upload/download on the network:
extracting the UFI from the network traffic;
comparing the extracted UFI against a local and central cache of known media UFIs; and
if the comparison indicates that the extracted UFI is unknown, then sampling and storing content from the transferred media.

8. A method according to claim 7, further including analysing the stored content (e.g. at a centralised processor/location) by comparing it with a database of known media fingerprints (e.g. content fingerprint, watermark) and, if the stored content is recognised then the UFI of the extracted media transfer is added to a central store.

9. A method according to any one of the preceding claims, further including calculating a measure or estimate of movement of encrypted media by statistical measurement of movement of encrypted media.

10. A method according to claim 9, wherein the statistical measurement includes searching for inbound/outbound web pages, protocols used, ports opened and/or subscriber behaviours that give an indication of unlicensed transfer of media.

11. A method according to any one of the preceding claims, further including analysing information sourced from at least one client application of a P2P or private network.

12. A method of analysing media transferred over a network including:
analysing media being transferred over a network in order to obtaining an identifier associated with the media;
comparing the identifier with a set of data identifying media content in order to identify content of the media being transferred.

13. A method according to claim 20, wherein the step of analysing the media is implemented by rebuild and linking of the identifier close to the network, e.g. at a network probe.

14. A computer program product comprising a computer readable medium, having thereon computer program code means, when the program code is loaded, to make the computer execute methods of analysing data being transferred over a network according to claim 1, 11 or 13.

15. Apparatus configured to execute methods of analysing data being transferred over a network substantially according to the method of claim 1 or 12
